# EUROPEAN PATENT SPECIFICATION

(11) **EP 2 029 290 B1**
(45) Date of publication and mention of the grant of the patent: **11.08.2010**
(21) Application number: 07732977.9
(22) Date of filing: 25.05.2007
(51) Int. Cl.: B05D 5/08

(54) **ULTRAHYDROPHOBIC SURFACES AND METHODS FOR THEIR PRODUCTION**
ULTRAHYDROPHOBISCHE OBERFLÄCHEN UND HERSTELLUNGSVERFAHREN DAFÜR
SURFACES ULTRAHYDROPHOBES ET PROCÉDÉS DE FABRICATION ASSOCIÉS

(30) Priority: 26.05.2006 GB 0610550
(43) Date of publication of application: 04.03.2009
(73) Proprietor: Cambridge University Technical Services Ltd., Cambridge CB2 2TS (GB)
(72) Inventor: STEINER, Ulrich, Hardwick CB23 7QS (GB); VAN DER WAL, Pieter, NL-9211 TV Kortehemmen (NL)
(74) Representative: Samuels, Lucy Alice
(86) International application number: PCT/GB2007/001958
(87) International publication number: WO 2007/138286

(56) References cited:
- EP-A2- 0 933 388
- JP-A- 54 143 786
- JP-A- 54 143 789
- US-A- 4 259 209
- US-A1- 2006 115 623

## Description

The invention relates to provision of ultrahydrophobic surfaces. The invention provides novel methods for the production of ultrahydrophobic surfaces, and novel products of such methods.

Surfaces that are not wetted by water, described generally in this specification as ultrahydrophobic surfaces, are technologically and economically important because they possess so-called self-cleaning properties. Residues of almost all types do not strongly adhere to such surfaces and they are carried off by water that very easily runs off such surfaces. Such surfaces are known in nature, for instance in the structures of plants and insects. The leaves of the lotus plant are a prominent example.

The general requirements for obtaining ultrahydrophobic surfaces having these properties have been known for many years, since the publications of Wenzel (Ind. Eng. Chem., 1936, 28, 988) and Cassie and Baxter (Trans. Faraday Soc. 1944, 40, 546). The surface must be formed from a material which is apolar/hydrophobic and has water contact angle above 90°. The surface must also be provided with some degree of surface roughness or patterning.

Surfaces of this type exhibit the three characteristic features of self-cleaning surfaces, namely: (1) they exhibit weak adhesion of nearly every type of surface contaminant, (2) the tilt angle required to cause water to run off is very low, and (3) surface contaminants are removed by water run-off in the absence of additives such as detergents.

There are many publications of implementations of this general principle.

For instance, US 3904795 describes applying a coating of an aqueous dispersion of particles of a fusible water-insoluble addition polymer, drying the coating such that the water evaporates completely and heating the coating so that the particles fuse to a continuous uncracked film. This method provides a surface which has some self-cleaning properties but they are insufficient.

There have been several publications describing surfaces which comprise a continuous layer having elevations thereon, with either the continuous layer or the elevations or both being formed of material having low surface energy.

CA 2260470 describes a structure having projections of height 50 nm to 10 microns and spacing 50 nm to 10 microns, and aspect ratio 0.5 to 20. It is suggested that the structured surface can be provided by various methods including mechanical impression, lithographic etching, or shaping.

US 6660363 similarly describes a surface which is provided with a layer of adhesive and then particles of low surface energy material such as PTFE or other hydrophobic polymer are adhered to the surface. This results in elevations 5 to 200 microns apart and 5 to 100 microns in height. The intention is stated to be providing the particles of hydrophobic polymer close enough together to avoid water contacting the surface between the elevations. It is stated that the polymer powder can be applied for instance by stamping, gluing or chemical or physical etching. Generally the particles are applied as a solution or dispersion and then the coating is dried or cured.

CA 2356178 teaches that a surface having topography which complies with a particular definition results in improved self-cleaning properties of that surface. Generally the definition is said to require raised areas and depressions of 0.1 nm to 1 mm depth or height. The topography can be provided by various structures such as conical particles, including those having additional projections, and scratches, including those having non-smooth interior surfaces. Methods for producing the desired topography include moulding and anodising the surface.

WO 01/19932 is similar in that it describes application to a surface of a coating containing a film former and insoluble particles of size 10 to 50 microns, together with a solvent. The coating is applied to the relevant surface in such a way that the particles have a spacing 5 to 100 microns and the solvent is allowed to evaporate, leaving a layer of film former having embedded therein the particles.

WO 2004/037944 also describes modifying a surface to provide protrusions with the application of particles having size below 300 nm.

There are other disclosures of layers intended to provide self-cleaning properties in FR-A-2663568 and JP A-8/118190.

All of these disclosures suffer from the disadvantage that the surfaces disclosed have inferior mechanical robustness and wear resistance. Since low surface energy materials have typically poor mechanical properties the lifetime of most self-cleaning surfaces is short. They lose their ultrahydrophobic properties after a relatively short exposure to ambient conditions.

Furthermore, the methods disclosed for the provision of the structure in the surfaces are complex and time-consuming.

US 2002/034627 addresses the problem of improving durability of a self-cleaning surface. This approaches the problem by providing a mesoporous ceramic film. A layer is produced by providing monomer of tetraethoxysilane (TEOS) containing micelles of cationic surfactant. Once the layer has been formed, the cationic surfactant is removed by calcining, leaving (in the Examples) pores of size around 3 nm. The maximum size mentioned generally is 40 nm. The film is around 1 micron thick in the Examples and up to 10 microns thick in general. The surface produced is formed of a high surface energy material, which therefore must be modified in order to render the surface as a whole self-cleaning.

A disadvantage of this system is that a surface chemical treatment of this type is easily degraded by UV light or simple abrasion, destroying the self-cleaning effect. This is particularly problematic, given that the mesoporous ceramic material itself is of high surface energy.

Gu et al in "Structural colour and the lotus effect", Angew. Chem. Int. Ed. 2003, 42, No. 8, pages 894 to 897, disclose a similar system. This publication discloses production of a self-cleaning surface by coating a glass substrate with a mixture containing polystyrene spheres and silica nanoparticles. Calcination destroys the polystyrene spheres and is said to "solidify" the silica nanoparticles. After this structure has been created, a low surface energy material (a fluoroalkylsilane) is applied in order to render the surface hydrophobic.

As with US 2002/034627, this system involves a surface chemical treatment which is easily degraded, for instance by abrasion, destroying the self-cleaning effect. This then reveals the high surface energy silica material underneath.

The present invention addresses the problem of providing self-cleaning surfaces which are mechanically robust, and thus industrially useful, and which retain their self-cleaning properties for a significant period of time despite major use.

The document EP-A2-0 933 388 teaches to produce a coated ultrahydrophobic surface with an array of elevations and depressions by a forming step after or simultaneously with the coating step.

The invention aims in particular to do this by means of methods which are convenient to operate on an industrial scale and which allow predictability of the final structure.

Accordingly, in a first aspect, the invention provides a method of producing an ultrahydrophobic surface, the method comprising providing a mixture comprising low surface energy material and sacrificial material, forming a layer from the mixture, wherein the layer contains particles of sacrificial material, treating the layer so as to destroy the particles of sacrificial material and to generate a laterally continuous matrix of low surface energy material containing an array of depressions.

Surfaces obtainable by this method are novel and form the second aspect of the invention.

Key to the present invention is the fact that the formed ultrahydrophobic surface comprises a laterally continuous matrix of low surface energy material containing depressions. That means the depressions are surrounded by a continuous network of elevations. This differs from the structured surfaces discussed above that are formed of low surface energy material, in that the prior art approaches provide a laterally continuous matrix having projections. Thus, the projections are surrounded by a continuous, interconnected network of valleys. In some of these prior art cases the projections are formed of low surface energy material and in other cases the matrix is also formed of low surface energy material.

The invention has the advantage that the structure of the surface means that it has greater mechanical robustness than surfaces of the prior art and retains the self-cleaning properties for a longer period than surfaces of the prior art. The defined structure has the particular advantage that even with some degree of wear of the low surface energy material the structure of the surface is retained, maintaining the self-cleaning properties.

Similarly, the surface of the invention has the advantage over US 2002/034627 and Gu et al discussed above of longer retention of self-cleaning properties.

A key aspect of the method of the invention is the formation of a layer which comprises particles of sacrificial material distributed throughout a low surface energy material, and then destroying the particles whilst leaving the low surface energy material in solid form. Thus depressions (or pits) are created within a continuous matrix of the low surface energy material. The particles of sacrificial material can be destroyed by a method which removes the sacrificial material from the surface altogether or by a method which allows incorporation of the sacrificial material into other elements of the surface, for instance by dissolution.

It is essential that the surface comprises a laterally continuous matrix of low surface energy material in which the array of depressions is disposed. This continuity can arise from solidification of a liquid low surface energy material. Alternatively, the low surface energy material may be present in the mixture and in the layer in solid form and can, for instance, be fused so as to provide a continuous matrix. Any fusing may happen sequentially or simultaneously with the step of destruction of the particles of sacrificial material.

In the method a mixture is provided comprising sacrificial material. A single type of sacrificial material may be used, or mixtures of more than one type. Any material may be used which is capable of being treated when in particulate form so that the particles are destroyed and the low surface energy material is retained. The sacrificial material can for instance be a polymer, a crystalline or amorphous solid state material or even a liquid. It is necessary that the mixture is generated in such a way that the sacrificial material can be in particulate form in the layer. The particles may be in solid or liquid form, preferably solid form.

The sacrificial material may be such that it is not in the form of particles in the mixture until it is treated in some way to form particles when it is in the layer.

The mixture also comprises low surface energy material. A low surface energy material has a water contact angle greater than 90° when in the form of a plane, unstructured surface. That is, a drop of water placed onto a plane, unstructured surface of the low surface energy material has a contact angle of greater than 90°.

Thus the low surface energy material can be selected from highly hydrophobic materials such as fluorinated polymers, for example polytetrafluoroethylene (PTFE). Also usable are mixtures of polymers with additives which during processing render the polymer material hydrophobic. These include for example low molecular weight additives, self-assembled monolayers and waxes. What is essential is that there is a laterally continuous matrix of material which has low surface energy.

A single low surface energy material may be used, or mixtures.

The mixture may comprise only sacrificial material and low surface energy material or it may comprise other components, such as processing aids or carriers.

As a result the mixture as a whole may be in liquid or granular (particulate) form. It is generally flowable so that it is possible to form a layer.

Preferably the sacrificial material is in solid particulate form in the mixture. Preferably also the low surface energy material is in solid particulate form in the blend.

It is often convenient to provide the sacrificial material and the low surface energy material in the mixture in a carrier liquid, usually as a suspension, often a colloidal suspension. Any compatible carrier liquid can be used, and water is preferred. The ratio of the amounts (by weight) of low surface energy material: sacrificial material can be chosen according to the array of depressions it is intended to provide, but generally is in the range 10:1 to 1:10, more preferably 1:6 to 1:2.

In the method a surface is provided which has ultrahydrophobic properties. Thus, the mixture may be formed as a layer which is a coating on an article which is required to have self-cleaning properties. Any appropriate coating technique can be used, such as spin-coating, dip-coating, spreading, spraying, application with a brush or roller.

We find that application of the mixture to the article to form the layer by spraying is particularly beneficial. Thus, in this case the sacrificial material and the low surface energy material are provided as a mixture, usually in a carrier liquid as discussed above, and then this mixture is sprayed on to the surface to be coated.

The distance between the spray position and the surface to be coated is conventional, as is the duration of spraying which is generally chosen according to the amount of the mixture to be applied.

It is preferred that the distance between the spray position and the surface to coated is at least 15 cm, preferably at least 20 cm. This results in a more appropriate pattern of application of the mixture to the surface and better ultrahydrophobicity properties.

It is also found that spraying of the mixture on to a surface which is already heated is beneficial. Suitable temperatures for the preheated surface are at least 100°C, preferably at least 150°C.

It can also be preferred to pretreat the surface of the article before application of the mixture of sacrificial material and low surface energy material to form the layer. For instance, it can be desirable to roughen the surface of the article itself prior to application of any materials to it.

It can also be desirable to apply a layer of primer directly to the surface of the article before application of any other layers. Suitable primers for low surface energy materials such as PTFE include water based primers of the type supplied by DuPont under the trade name 459-ATX, 459-804, PTFE 852-20x or 852-200.

If primer is applied then any suitable methods can be used, such as spin-coating, dip-coating, spreading, spraying and application with a brush or roller. Spin-coating, dip-coating and spraying are preferred.

After application of primer it is preferred to subject the primer to a heat treatment process for at least five minutes, preferably at least ten minutes, up to 25 or 30 minutes, for instance about 15 minutes. The heat treatment temperature is usually at least 200°C, for instance about 250°C.

It can also be advantageous, either in combination with a primer layer or without a primer layer, to apply a pre-coating, prior to the layer formed from the mixture of sacrificial material and low surface energy material, of low surface energy material only a preferred is fluorinated polymers (such as PTFE).

If used, this pre-coating is preferably applied by spraying, although spin-coating may also be used.

When applied, the pre-coating of low surface energy material is preferably heat treated after application, for instance for at least five minutes, in particular about ten minutes. The treatment temperature is usually at least 300°C, often at least 350°C, for instance about 385°C. We discuss below the fact that in a further aspect of the invention it is possible to obtain ultrahydrophobic surfaces by a method which involves application of low surface energy material specifically by a spraying or dip-coating method, in this case without the need for sacrificial material. The application of a pre-coating of low surface energy material in the method of the first aspect of the invention may include any of the preferred features of this further aspect discussed below.

Alternatively, the layer may be a surface layer of an article which is formed itself from the mixture or which has a surface already formed from the mixture. In this case, treatment can destroy the particles of sacrificial material in the surface layer of the object, thus providing the article with a structured surface.

Fabrication of such articles can be by any appropriate method, such as casting, moulding or shaping.

Generally the layer, especially if it is a coating on an article required to have a self-cleaning surface, has thickness similar to the thickness desired for the self-cleaning surface layer itself. For instance it can be in the range 100 nm to 100 microns, preferably up to 50 microns, more preferably 100 nm to 25 microns, preferably up to 20 microns.

In the method it is required to destroy the particles of sacrificial material and to provide the low surface energy material as a continuous matrix and to ensure that it is in solid form.

Destruction of the particles of sacrificial material can be done, for example, by heating; exposing the layer to a solvent or a gas; irradiation with electromagnetic radiation, electrons, ions or neutral particles; exposure to a plasma; or exposure to ultrasound. Other methods can be used provided that the particles of sacrificial material are destroyed, for instance by removal of the sacrificial material altogether by evaporation, sublimation or thermal degradation. Alternatively the particles can be destroyed by dissolution of the sacrificial material into the other materials that are part of the layer or part of the article which is coated.

Preferably the particles of sacrificial material are destroyed by removal of the sacrificial material, often by heating to induce thermal degradation. When the low surface energy material is also in solid form, the same heating step can induce melting and fusion of the particles of low surface energy material to provide the laterally continuous matrix. Subsequent cooling then allows solidification.

Optionally, the surface may be subjected to a treatment step. This may, for instance, improve appearance or mechanical strength or even improve the self-cleaning properties.

Such a post-treatment could include: exposure of the article or its surface to elevated temperatures; exposure to solvents or gases; exposure to electromagnetic, ion or other particle irradiation or exposure to a plasma. The treatment could include deposition of a further surface layer, deposition of a self-assembled monolayer, wax or any other material or the application by evaporation or sputtering or electro deposition of a further material or modification of the surface by a chemical reaction.

Such treatments are usually post-treatments effected after the formation of the surface but they may if appropriate also be included in earlier stages of the process.

The particles of sacrificial material in the layer are often of substantially the same diameter as the depressions in the surface produced, or slightly larger. Thus the average (mean) size of the particles of sacrificial material can be from 100 nm to 100 microns, preferably 0.5 to 25 microns, often at least 5 microns. It can be up to 20 or 10 microns. The average diameter of the depressions is also preferably in the same ranges.

Alternatively, it is also possible for the particles of sacrificial material to be aggregates of smaller sub-particles so that the average diameter of the depressions is preferably in the ranges above, but the average diameter of the sub-particles is significantly smaller.

The average (mean) depth of the depressions is also generally (independently) in the same size ranges as given above for the diameter of the depressions.

In this specification the diameter of a particle (or sub-particle) is the maximum dimension of the particle. The diameter of a depression is the maximum lateral dimension of a depression. In practice, the particles are often substantially spherical and the depressions are often of substantially circular lateral cross-section.

Preferably the depressions are uniformly distributed across the surface. The average (mean) centre-to-centre distance is preferably in the range of 100 nm to 100 microns, more preferably at least 0.5 microns and preferably not more than 10 microns. The depressions are preferably in a closely spaced array such that the average diameter of the depressions is greater than the average edge-to-edge distance between them. Preferably the ratio of the average centre-to-centre distance to the average diameter is less than 2, preferably not more than 1.8, more preferably not more than 1.5.

The diameter of the depressions, the depth of the depressions and the centre-to-centre spacing of the depressions may vary across the surface. They may have a wide size distribution, in particular, for example, from 4 to 14um.

It is, however, preferred that the diameter of the depressions, the depth of the depressions and the centre-to-centre spacing of the depressions have, independently, a narrow distribution of sizes. In particular, as well as the average for each of these dimensions falling within the range 100 nm to 100 microns (preferably up to 10 microns), it is preferred that at least 50% (by number) of the depressions have the relevant diameter in the range 100 nm to 100 microns (preferably up to 10 microns), more preferably 80% in this range and in particular at least 90% in this range. It is preferred that at least 50% have the relevant parameter in the range plus or minus 50% of the average, more preferably plus or minus 30% of the average. It is more preferred that at least 80%, preferably at least 90%, have the relevant dimension within plus or minus 50%, more preferably plus or minus 30%, of the average. Each of these size distributions is preferred for each of the three diameters discussed, independently of one another.

The low surface energy material, if present in the mixture in the form of particles, can have any appropriate average diameter, generally not more than 10 microns, preferably not more than 1 micron, often in the range 10 to 900 nm, for instance 100 to 500 nm.

If the layer is a coating on an article which is not itself formed from low surface energy material then the thickness of the entire layer is generally in the range 100 nm to 100 microns, preferably 100 nm to 50 microns or 100 nm to 20 microns.

We provide mixtures which are suitable for use in provision of ultrahydrophobic surfaces. Such mixtures are flowable mixtures comprising low surface energy material and particles of sacrificial material.

The mixture is flowable to facilitate formation of a layer and may be a solid, granular mixture but is preferably a liquid mixture in which particles of sacrificial material are dispersed. The low surface energy material is preferably also in particulate form in the mixtures of the fourth aspect of the invention and in this case the particles of sacrificial material and particles of low surface energy material are generally dispersed in a carrier liquid, which can be any convenient inert liquid such as water.

As in the first aspect of the invention, the sacrificial material is a material which has properties such that the particles formed from it can be destroyed by a treatment to which the low surface energy material is substantially chemically inert. That is, the low surface energy material is generally not chemically affected but may for instance undergo a change of physical state, such as fusion or melting.

In the mixture of the fourth aspect of the invention the ratios of sacrificial material to low surface energy material and the size distributions of particles of these are the same as discussed above in connection with other aspects of the invention.
The sacrificial material and low surface energy material can be of the same types as discussed above in connection with other aspects of the invention.

We have also found that it is possible to produce an ultrahydrophobic surface without the necessity for a sacrificial material provided that the low surface energy is applied in a particular manner, namely by spraying. We find that although the robustness of surfaces produced in this manner are not as advantageous as those produced according to the first aspect of the invention, the method allows the production of ultrahydrophobic surfaces in very convenient and economical manner.

Thus, according to a fifth aspect of the invention we provide a method of producing an ultrahydrophobic surface on an article, the method comprising providing an article having a surface and providing a low surface energy material and spraying the low surface energy material onto the surface of the article to form a layer and subjecting the layer to a solidification step.

The low surface energy material is provided in sprayable form. The low surface energy material itself is generally part of a liquid blend comprising low surface energy material and carrier liquid, and this liquid blend is sprayed onto the surface of the article.

Preferably a primer is applied to the surface of the article prior to application of any other layer. The primer preferably has the characteristics discussed above in connection with the primer for use in the first aspect of the invention.

It is also preferred that the primer is subjected to a heat treatment after application, also as discussed above.

It is also preferred to apply a pre-coating of low surface energy material. This is preferably applied by spraying.

In this pre-coating and in the outer layer which forms the ultrahydrophobic surface, the low surface energy material is preferably a highly hydrophobic material such as a fluorinated polymer, for example PTFE.

We have found that the degree of coverage of the surface by the outer layer formed from low surface energy material is important. Preferably it is in the range 15 to 90% (based on the area of the article surface).

We also find that the distance of the spray position from the surface is important and is generally at least 10 cm and preferably at least 15 cm and more preferably at least 20 cm. It is usually not more than 45 cm.

The duration of spraying also affects the coverage and hence the ultrahydrophobic nature of the surface. Spraying time is usually in the range 1 to 30 seconds and a longer spraying time results in greater coverage.

If primer is used it is preferably heat treated, preferably for at least 10 minutes, for instance at about 15 minutes. Heat treatment temperatures can be at least 200°C, for instance about 250°C.

If a pre-coating of low surface energy material is applied then it is preferably heat treated for at least 5 minutes, for instance about 10 minutes. Heat treatment temperatures can be at least 300°C, preferably at least 350°C, for instance about 385°C.

When primer and/or pre-coating of low surface energy material are used these can be applied by any appropriate method but spin-coating and spraying are preferred.

The outer layer comprising low surface energy material is applied by spraying. Any suitable spraying apparatus can be used, for instance a spray gun. An example is a Sealey airbrush kit.

It is preferred that the surface onto which the outer layer of low surface energy material is sprayed is heated at the time of spraying. For instance it may be at a temperature at least 100°C, for example about 150°C.

In a particularly preferred embodiment it is possible to produce an ultrahydrophobic surface by coating an article with a coating which is nearly transparent (slightly milky in appearance). In this case, it is not essential to apply a primer.

According to this method primer is applied to the surface of the article by spin-coating, dip-coating or spraying. The layer applied is then heat treated for 10 to 20 minutes at 200 to 300°C. A pre-coating of low surface energy material is then applied onto the primer layer by spin-coating or spraying and heat treated for 5 to 15 minutes at 350 to 400°C. The outer coating of low surface energy material is then applied by spraying and heat treated for 5 to 10 minutes at 300 to 350°C.

In the invention the ultrahydrophobic surface produced has very low wettability. Thus the water contact angle is very high, and wetting of the surface is prevented, causing the formation of drops that make very little contact with the surface. These drops roll off even when the inclination of the surface is low, even below 10°. They can pick up and carry off contaminant particles, thereby cleaning the surface. The surfaces can be very easily cleaned using water without addition of additives such as detergents.

The ultrahydrophobic surface has a water contact angle of 140° to 180°, preferably 160 to 180°, measured in a way averaged over the structured surface.

The ultrahydrophobic surface produced according to the invention can be used as a surface of a wide variety of industrial articles, for numerous uses. Examples include coatings for equipment used in the handling of gases, liquids, solid particulates or mixtures, such as in the food, chemicals and pharmaceuticals industries; coatings for glass, such as in windows, laboratory equipment, visors and screens; coatings for cooking utensils; coatings for outdoor surfaces such as buildings, construction materials, information signs; coatings for vehicles, such as body parts and windows
for buildings and vehicles such as cars, buses, aeroplanes, trains, etc.; coatings for water-borne machinery such as boats, surf-boards, submarines and oil platforms; coatings for surfaces (eg glass surfaces and mirrors), especially in areas of high humidity such as kitchens and bathrooms.

The invention will now be illustrated with reference to the following Examples.

### Example 1

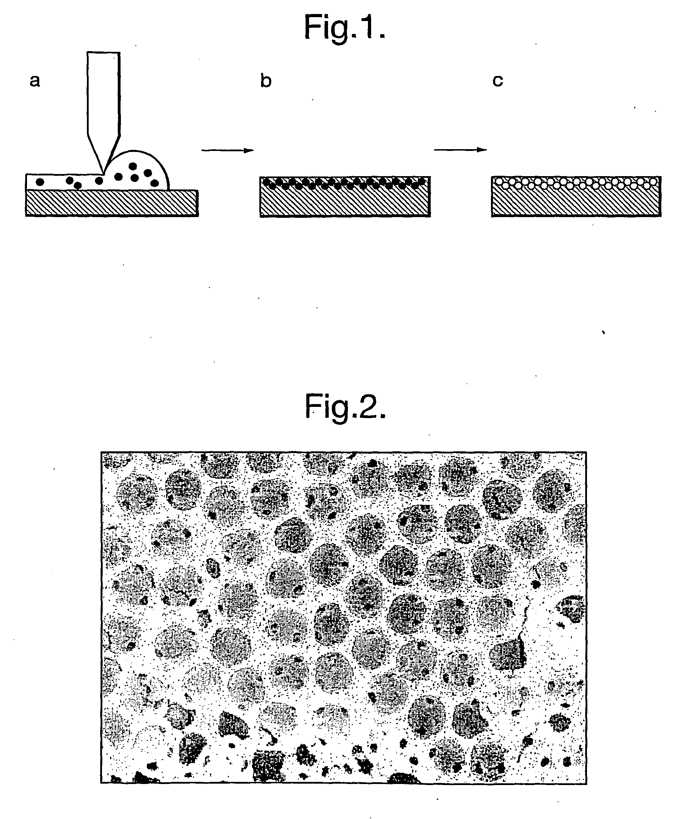

An aqueous solution was prepared by mixing two colloidal suspensions. These were the Teflon (Trademark) PTFE 30 N aqueous suspension purchased from DuPont, consisting of polytetrafluoroethylene spheres with a diameter of 220 nm in an aqueous suspension, and a suspension of poly(styrene-co-divinylbenzene) spheres with a diameter of 6.4 µm suspended in water, purchased from Sigma. The ratio of divinylbenzene to styrene was 5 to 95. Mixtures of varying relative amounts of the two suspensions were deposited onto a surface (typically a glass slide) using a blade-coating technique: A drop of the solution was placed onto the surface and a blade with its straight edge parallel to the surface was moved across the surface, keeping the distance between the blade edge and the substrate surface constant. This caused the formation of a film with a homogeneous thickness. The coated surface was placed onto a hotplate set to 120°C to dry. Subsequently the film-covered substrate was heated to 290°C for 5 minutes to degrade and remove the poly(styrene-co-divinylbenzene) spheres, to remove the surfactant that was part of the two suspensions, and to partially fuse the Teflon particles. This procedure is schematically shown in Figure 1.

If a pure Teflon suspension is used, this procedure resulted in a planar, smooth surface that had a slight corrugation on the 220 nm length scale. A water drop placed on such a surface showed a contact angle of 125 degrees. This is larger than the water contact angle of planar Teflon sheets of 115 degrees, because of the surface structure on the 220 nm length scale. Water drops placed on such a surface did not easily run off and often became pinned and remained on the surface. Figure 2 shows an image of a surface made from a mixture that contained 26% of Teflon colloids and 74% of poly(styrene-co-divinylbenzene) colloids (by volume). The voids on the film stem from the removal of the 6.4 µm-sized poly(styrene-co-divinylbenzene) spheres. A water drop placed on such a surface showed a macroscopic contact angle (i.e it was measured in a way that averaged over the structure on the 1 to 10 µm scale) of more than 170 degrees. Water drops placed on this surface ran off when only slightly perturbed (e.g. by slightly tilting the sample). Dust particles or other dirt that was placed onto the surface was carried off by the water drops that ran off the surface.
Figure 1 shows a schematic representation of the film manufacture process: (a) surface is blade coated by a suspension containing small Teflon and large poly(styrene-co-divinylbenzene) colloidal spheres (only the larger spheres are indicated); (b) cross-sectional structure of the coating after drying; (c) cross-sectional structure of the surface after removal of the large colloidal spheres.
Figure 2 shows a scanning electron microscopy image of the surface, showing the surface voids that stem from the removal of the bead-blasted poly(styrene-co-divinylbenzene) colloids.

### Example 2

A glass surface was provided. This was sand blasted to result in roughening. Primer 459-804 supplied by DuPont was applied using a Sealey airbrush kit model no. AB931 driven by a nitrogen line with a pressure of 3 bar.

The primer was applied in a thin layer and then heated in a furnace at 250°C for 15 minutes.

A pre-coating of DuPont clear PTFE 852-200 which then applied. This was applied by spraying a suspension of the PTFE in a thin layer using the same spray gun as above.

The thin layer was then heated in a furnace at 385°C for 10 minutes until it was set.

The second, outer coating which forms the ultrahyd rophobic surface was then applied. The layer was formed using a blend comprising 1 g of the same PTFE suspension as used to make the pre-coating, 2g water and one 1g polystyrene.

The pre-coated glass surface was placed on a hot plate and heated to 120°C. The second, outer coating was sprayed using the same spray gun as for the primer and pre-coating layers, onto the heated sample.

After spraying the sample was then heated in a furnace at 320°C for five minutes. This resulted in degrading and removing the polystyrene.

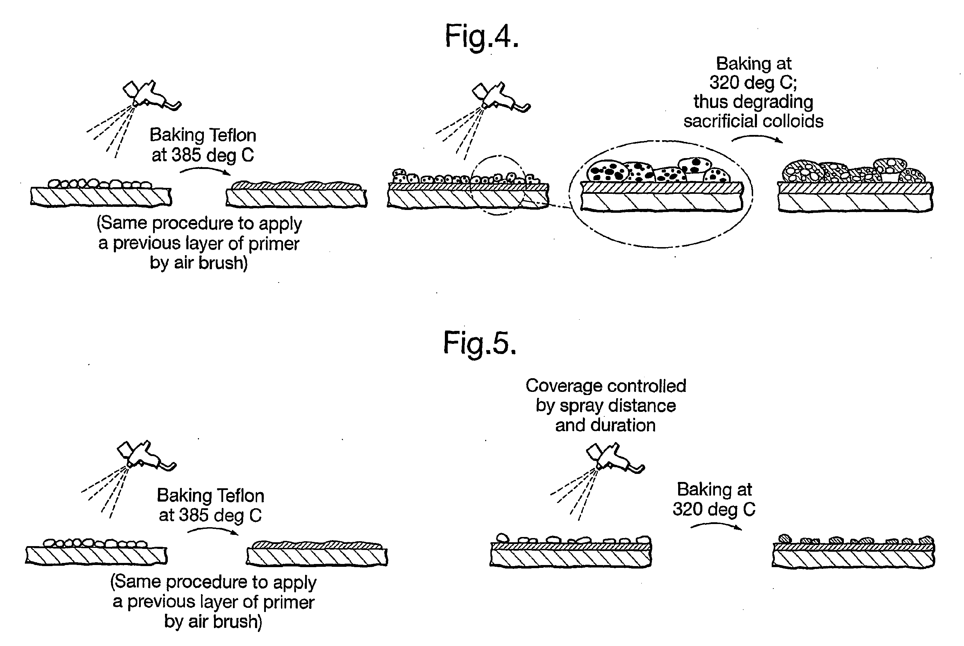

Figure 4 illustrates the process.

### Example 3

In a further example the same method was followed as in example 2 except that the second, outer coating, contained no polystyrene. This also resulted in a ultrahydrophobic surface.

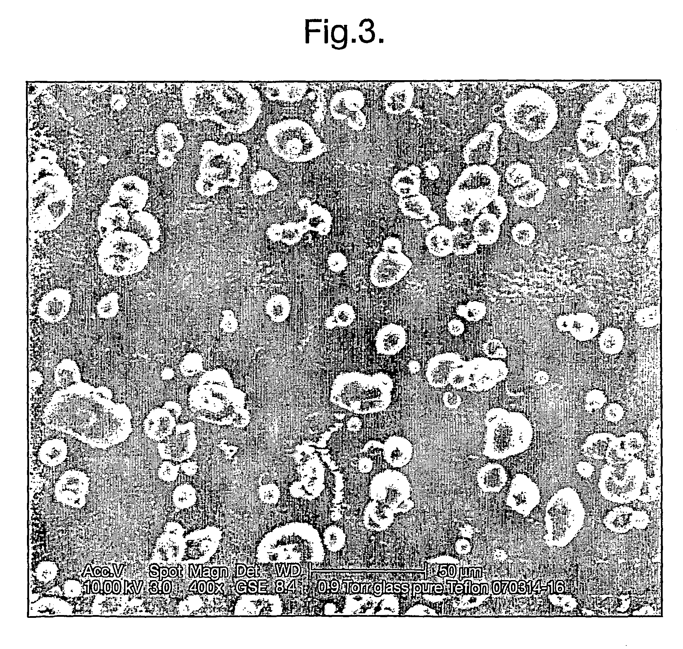

Figure 5 illustarates the process and figure 3 is an SEM image of the surface resulting from this process.

## Claims

1. A method of producing an ultrahydrophobic surface, the method comprising providing a mixture comprising low surface energy material and a sacrificial material, forming a layer from the mixture wherein the layer contains particles of the sacrificial material, treating the layer so as to destroy the particles of sacrificial material and generate a laterally continuous matrix of solid low surface energy material containing an array of depressions.

2. A method according to claim 1 comprising providing a substrate and forming the layer on the substrate.

3. A method according to claim 1 or claim 2 in which the sacrificial material is in particulate form in the mixture.

4. A method according to any preceding claim in which the particles of sacrificial material are destroyed by heating.

5. A method according to claim 4 in which the low surface energy material is in solid particulate form in the mixture and in the layer and the heating fuses the particles to form a laterally continuous matrix of low surface energy material.

6. A method according to any preceding claim in which the depressions have average diameter in the range 100 nm to 100 microns.

7. A method according to any preceding claim in which the depressions have average diameter at least 0.5 microns, preferably at least 5 microns.

8. A method according to any preceding claim in which the depressions have average depth in the range 100 nm to 100 microns.

9. A method according to any preceding claim in which the average centre-to-centre distance between the depressions is in the range 100 nm to 100 microns.

10. A method according to any preceding claim in which the low surface energy material is in the mixture in the form of particles having average size not more than 100 micron, preferably not more than 1 micron.

11. A method according to any preceding claim in which the sacrificial material is in the mixture in the form of particles having average size at least 5 micron.

12. A method according to any preceding claim in which in the blend the ratio by weight of low surface energy material to sacrificial material is in the range 10:1 to 1:10, preferably 1:6 to 1:2

13. A method according to any preceding claim in which the ultrahydrophobic surface has a water contact angle of at least 140°.

14. A surface obtainable by a method according to any of claims 1 to 13.

15. An article having an ultrahydrophobic surface, the surface having properties according to claim 14.

## Patentansprüche

1. Verfahren zur Herstellung einer ultrahydrophoben Oberfläche, wobei das Verfahren Folgendes umfasst: Bereitstellen eines Gemischs, das ein Material mit niedriger Oberflächenenergie und ein Opfermaterial umfasst, Bilden einer Schicht aus dem Gemisch, wobei die Schicht Partikel des Opfermaterials enthält, Behandeln der Schicht dergestalt, dass die Partikel des Opfermaterials zerstört werden und eine lateral kontinuierliche Matrix aus festem Material mit niedriger Oberflächenenergie herbeigeführt wird, die eine Anordnung von Vertiefungen enthält.

2. Verfahren nach Anspruch 1, das die Bereitstellung eines Substrats und die Bildung der Schicht auf dem Substrat umfasst.

3. Verfahren nach Anspruch 1 oder 2, wobei das Opfermaterial in partikulärer Form im Gemisch vorliegt.

4. Verfahren nach einem der vorangehenden Ansprüche, wobei die Partikel des Opfermaterials durch Erhitzen zerstört werden.

5. Verfahren nach Anspruch 4, wobei das Material mit niedriger Oberflächenenergie in fester partikulärer Form im Gemisch und in der Schicht vorliegt und das Erhitzen die Partikel zur Bildung einer seitlich kontinuierlichen Matrix aus Material mit niedriger Oberflächenenergie verschmilzt.

6. Verfahren nach einem der vorangehenden Ansprüche, wobei die Vertiefungen einen durchschnittlichen Durchmesser im Bereich von 100 nm bis 100 Mikron aufweisen.

7. Verfahren nach einem der vorangehenden Ansprüche, wobei die Vertiefungen einen durchschnittlichen Durchmesser von mindestens 0,5 Mikron, bevorzugt mindestens 5 Mikron aufweisen.

8. Verfahren nach einem der vorangehenden Ansprüche, wobei die Vertiefungen eine durchschnittliche Tiefe im Bereich von 100 nm bis 100 Mikron aufweisen.

9. Verfahren nach einem der vorangehenden Ansprüche, wobei der durchschnittliche Abstand von Mittelpunkt zu Mittelpunkt zwischen den Vertiefungen im Bereich von 100 nm bis 100 Mikron liegt.

10. Verfahren nach einem der vorangehenden Ansprüche, wobei das Material mit niedriger Oberflächenenergie ein Gemisch in der Form von Partikeln mit einer durchschnittlichen Größe von nicht mehr als 100 Mikron, bevorzugt nicht mehr als 1 Mikron darstellt.

11. Verfahren nach einem der vorangehenden Ansprüche, wobei das Opfermaterial im Gemisch in der Form von Partikeln mit einer durchschnittlichen Größe von mindestens 5 Mikron vorliegt.

12. Verfahren nach einem der vorangehenden Ansprüche, wobei in der Mischung das Gewichtsverhältnis des Materials mit niedriger Oberflächenenergie zum Opfermaterial im Bereich von 10:1 bis 1:10, bevorzugt 1:6 bis 1:2 liegt.

13. Verfahren nach einem der vorangehenden Ansprüche, wobei die ultrahydrophobe Oberfläche einen Wasserkontaktwinkel von mindestens 140° aufweist.

14. Oberfläche, die durch ein Verfahren nach einem der Ansprüche 1 bis 13 erhältlich ist.

15. Gegenstand mit einer ultrahydrophoben Oberfläche, wobei die Oberfläche Eigenschaften nach Anspruch 14 aufweist.

## Revendications

1. Procédé pour produire une surface ultra hydrophobe, le procédé comprenant les étapes consistant à : fournir un mélange comprenant un matériau à faible énergie de surface et un matériau sacrificiel, former une couche à partir du mélange dans lequel la couche contient des particules du matériau sacrificiel, traiter la couche afin de détruire les particules de matériau sacrificiel et de générer une matrice latéralement continue de matériau solide à faible énergie de surface contenant un réseau de dépressions.

2. Procédé selon la revendication 1, comprenant la fourniture d'un substrat et la formation de la couche sur le substrat.

3. Procédé selon la revendication 1 ou 2, dans lequel le matériau sacrificiel est sous forme particulaire dans le mélange.

4. Procédé selon l'une quelconque des revendications précédentes, dans lequel les particules de matériau sacrificiel sont détruites par chauffage.

5. Procédé selon la revendication 4, dans lequel le matériau à faible énergie de surface est sous forme solide particulaire dans le mélange et dans la couche, et le chauffage fusionne les particules pour former une matrice latéralement continue de matériau à faible énergie de surface.

6. Procédé selon l'une quelconque des revendications précédentes, dans lequel les dépressions ont un diamètre moyen compris entre 100 nm et 100 microns.

7. Procédé selon l'une quelconque des revendications précédentes, dans lequel les dépressions ont un diamètre moyen d'au moins 0,5 microns, et de préférence d'au moins 5 microns.

8. Procédé selon l'une quelconque des revendications précédentes, dans lequel les dépressions ont une profondeur moyenne comprise entre 100 nm et 100 microns.

9. Procédé selon l'une quelconque des revendications précédentes, dans lequel la distance moyenne de centre à centre entre les dépressions est comprise entre 100 nm et 100 microns.

10. Procédé selon l'une quelconque des revendications précédentes, dans lequel le matériau à faible énergie de surface est présent dans le mélange sous la forme de particules ayant une taille moyenne ne dépassant pas 100 microns, et de préférence ne dépassant pas 1 micron.

11. Procédé selon l'une quelconque des revendications précédentes, dans lequel le matériau sacrificiel est présent dans le mélange sous la forme de particules ayant une taille moyenne d'au moins 5 microns.

12. Procédé selon l'une quelconque des revendications précédentes, dans lequel, dans le mélange, le rapport en poids entre le matériau à faible énergie de surface et le matériau sacrificiel est compris entre 10:1 et 1:10, de préférence entre 1:6 et 1:2.

13. Procédé selon l'une quelconque des revendications précédentes, dans lequel la surface ultra hydrophobe a un angle de contact avec l'eau d'au moins 140°.

14. Surface pouvant être obtenue par un procédé selon l'une quelconque des revendications 1 à 13.

15. Article ayant une surface ultra hydrophobe, la surface ayant des propriétés selon la revendication 14.
